Europäisches Patentamt

European Patent Office

Office européen des brevets

(19)

(11) **EP 1 139 285 B1**

(12) **EUROPÄISCHE PATENTSCHRIFT**

(45) Veröffentlichungstag und Bekanntmachung des Hinweises auf die Patenterteilung:
**11.01.2006  Patentblatt 2006/02**

(51) Int Cl.:
*G06T 7/00* *(2006.01)*      *G01N 21/88* *(2006.01)*

(21) Anmeldenummer: **01890057.1**

(22) Anmeldetag: **02.03.2001**

(54) **Verfahren und Vorrichtung zur Prüfung bzw. Untersuchung von Gegenständen**

Method and apparatus for testing or inspection of articles

Procédé et dispositif pour contrôle ou inspection d'objets

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **31.03.2000  AT 5472000**

(43) Veröffentlichungstag der Anmeldung:
**04.10.2001  Patentblatt 2001/40**

(73) Patentinhaber: **Österreichisches Forschungszentrum Seibersdorf Ges.m.b.H.**
**1010 Wien (AT)**

(72) Erfinder:
• **Penz, Harald, Dr.**
  **1120 Wien (AT)**
• **Krattenthaler, Werner, Dr.**
  **2346 Maria Enzersdorf (AT)**
• **Mayer, Konrad, Dipl.-Ing.**
  **1230 Wien (AT)**

(74) Vertreter: **Wildhack, Helmut**
**Patentanwälte Wildhack-Jellinek,**
**Landstrasser Hauptstrasse 50**
**1030 Wien (AT)**

(56) Entgegenhaltungen:
DE-A- 3 612 268          DE-C- 4 410 603

EP 1 139 285 B1

**Beschreibung**

Die Erfindung betrifft ein Verfahren gemäß dem Oberbegriff des Patentanspruches 1 sowie eine Vorrichtung gemäß dem Oberbegriff des Patentanspruches 9.

Es ist bekannt, Bilder von Gegenständen unter Zuhilfenahme des sogenannten Blob-labeling-algorithmus auszuwerten; insbesondere werden derartige Vorgangsweisen eingesetzt, wenn die aufgenommenen Bilder auf Fehler oder auf Abweichungen von SollWerten untersucht werden sollen. Bei dieser Vorgangsweise ist es mitunter nicht einfach, die Blobs zu lokalisieren, zu identifizieren, untereinander genau abzugrenzen oder zusammengehörige Bildbereiche als zusammengehörig zu erkennen.

So ist aus der DE 4410603 ein Verfahren gemäß dem Oberbegriff des Anspruchs 1 zur Erkennung von Fehlern bei der Inspektion von strukturierten Oberflächen bekannt. Bei diesem Verfahren besteht die Aufgabe, eine unabhängig von der Anzahl der Strukturierungsebenen wirkende Fehlererkennung unter Einbeziehung von Strukturmerkmalen in Echtzeitbetrieb zur Trennung der Fehler von den Gutstrukturen zu gewährleisten. Gemäß der Erfindung wird durch Bildpunktklassifikation, in der eine Zusammenfassung von Gebieten eines aufgenommenen Bildes mit ähnlichen Bildpunktmerkmalen erfolgt, von dem Bild ein grauwertiges, Kanten- und Eckenstrukturen enthaltendes Zwischenbild erzeugt, in dem das Verhalten der Bildpunktmerkmale eines jeden Bildpunktes zu denen benachbarter Bildpunkte untersucht wird. Der Einsatz erfolgt vorwiegend in der statistischen Prozesskontrolle im Herstellungsprozess von Masken, LCDs, Leiterplatten und Halbleiterscheiben.

Erfindungsgemäß soll eine Vorgangsweise erstellt werden, mit der die Zusammengehörigkeit von Abweichungen einzelner Bildpunkte bzw. die Unterschiede zwischen unerwünschten Abweichungen und tolerierbaren Abweichungen bzw. ordnungsgemäß abgebildeten Bildbereichen besser erkannt werden können.

Dieses Ziel wird bei einem Verfahren der eingangs genannten Art mit den im Kennzeichen des Anspruches 1 angeführten Merkmalen erreicht. Bei einer Vorrichtung der eingangs genannten Art wird dies mit den Merkmalen des Kennzeichens des Anspruches 9 erreicht.

Erfindungsgemäß werden somit die Merkmalswerte aus den Merkmalsbildern durch eine vorgegebene getrennte Wertungsfunktion verknüpft und den Bildpunkten der einzelnen Blobs des Label-Bildes zugeordnet. Daraufhin wird ein Qualitäts- bzw. Kennmaß dieser einzelnen Blobs unter Zuhilfenahme einer vorgegebenen Qualitätsfunktion errechnet, das letztlich für die Bewertung der einzelnen Blobs ausschlaggebend ist. Damit können die erhaltenen Blobs besser bewertet bzw. klassifiziert werden. Die erfindungsgemäßen Verfahren sowie die Vorrichtung eignen sich besonders gut für schnelle Prüfungen, bei denen während der Aufnahme eines Bildes des Gegenstandes die Auswertung des vorangehend aufgenommenen Bildes erfolgt.

Zweckmäßig sind die Merkmale des Anspruches 2; die Binarisierungs-Funktion wird vor allem auf die zu beurteilenden Merkmale der aufgenommenen Bilder abgestellt, z.B. unter Berücksichtigung, ob es sich um die Überprüfung von Druckwerken, Holzmaserungen od.dgl. handelt; die Wertungs-Funktion wird insbesondere auf die auftretenden charakteristischen Merkmale der einzelnen Bildpunkte, z.B. Kontrast, Helligkeit usw., abgestellt. Die Binarisierungs-Funktion und die Wertungs-Funktion sind mathematisch unabhängige Funktionen.

Wenn gemäß Anspruch 3 für die Erstellung von Merkmalsbildern noch eine Anzahl von Soll-Bildern zur Verfügung gestellt wird, aus denen ebenfalls zur Erstellung der Merkmalsbilder Bildmerkmale extrahiert werden können, wird die Aussagekraft der nachfolgenden Auswertung erhöht. Die Auswertegenauigkeit und Aussagekraft der erfindungsgemäßen Vorgangsweise wird erhöht, wenn durch unterschiedliche Aufnahmeverfahren unterschiedliche Bildmerkmale aufweisende Bilder des Gegenstandes aufgenommen werden bzw. wenn auch die Soll-Bilder jeweils unterschiedliche Bildmerkmale aufweisen. Je nach den erstellten Soll-Bildern können aus den Soll-Bildern die für zweckmäßig erachteten Bildmerkmale extrahiert und mit den extrahierten Bildmerkmalen der Bilder des Gegenstandes zu den Merkmalsbildern zusammengesetzt werden. Dabei kann es, je nach dem vorliegenden Anwendungsfall, insbesondere zur Verbesserung des Erkennens zusammengehöriger Bildpunkte eines Bildes vorteilhaft sein, wenn die Merkmale des Anspruches 4 erfüllt sind, um damit auch einen möglichst großen Spielraum bei der Erstellung der Merkmalsbilder zu erhalten.

Die Merkmalswerte der erstellten Merkmalsbilder werden mit einer Binarisierungs-Funktion verknüpft und den einzelnen Bildpunkten der Merkmalsbilder binäre Werte zugeordnet, je nach dem, ob die mit der Binarisierungs-Funktion erhaltenen Merkmalswerte ein bestimmtes Kriterium erfüllen oder nicht. Dabei ist es rechnerisch von Vorteil bzw für die Auswertung vorteilhaft, wenn die Merkmale des Anspruches 5 erfüllt werden.

Nachdem mit den aufgenommenen Bildern und mit den Soll-Bildern die Merkmalsbilder erstellt wurden, werden von denselben Merkmalsbildern, wie sie zur Binarisierung vorgesehen wurden, unter Zuhilfenahme einer Wertungsfunktion entsprechende Funktionsbilder errechnet bzw. erstellt. Dabei kann, je nach Anwendungsfall, vorgegangen werden, insbesondere ist es vorteilhaft, wenn gemäß den Merkmalen des Anspruches 6 vorgegangen wird. Damit kann ein gut auswertbares Qualitäts- bzw. Kennmaß erhalten werden; es fällt damit leichter, unterschiedliche Eigenschaften von Bildpunkten zu erkennen bzw. zusammengehörige Bildpunkte zuzuordnen.

Vom Vorteil ist eine Vorgangsweise gemäß den Merkmalen des Anspruches 7, da damit auf alle Bildpunktwerte der Blobs dieselbe Qualitäts- bzw. Kennfunktion angewendet wird und somit eindeutig für die einzelnen Blobs vergleichbare Ergebnisse vorliegen, womit in den meisten Fällen das Auskommen gefunden wird und rasche Ergebnisse erreicht werden können.

Zweckmäßig erfolgt die Auswertung der Bildpunktwerte der Blobs, so wie sie mit der Wertungsfunktion ermittelt bzw. vorgegeben wurden, indem die Merkmale des Anspruches 8 angewendet werden bzw. durch Eintragen und z.B. Aufsummieren der bei Anwendung der Qualitätsfunktion auf die durch die Wertungs-Funktion bestimmten Bildpunktwerte der Bildpunkte der jeweiligen Blobs erhaltenen Funktionswerte in einem Speicher.

Dabei können auch die Koordinatenwerte der Bildpunkte der einzelnen Blobs Berücksichtigung finden, um z.B. die einzelnen Blobs bezüglich Schwerpunkt, Umfang oder ähnlichen Parametern auswerten zu können.

Die erfindungsgemäße Vorrichtung ist einfach aufgebaut und kann trotz der Vielzahl der anfallenden Daten ausreichend rasch rechnen bzw. ist in ihrem Aufbau einfach und mit herkömmlichen Bauteilen kostengünstig zu realisieren. Eine Anpassung der Vorrichtung an unterschiedliche Problemstellungen kann rasch erfolgen, da für jede Funktion eine Mehrzahl von unterschiedlichen Funktionen gespeichert vorliegen kann, die jeweils für spezielle Anwendungsfälle angepasst sind bzw. abgeändert werden können.

Im folgenden wird die Erfindung anhand der Zeichnung näher erläutert.

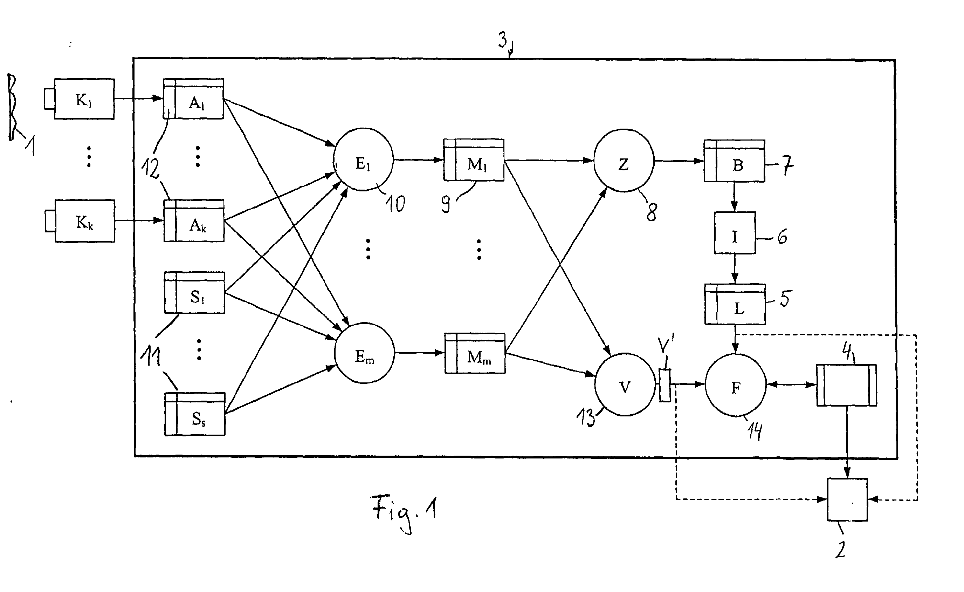

Fig. 1 zeigt ein Schaltschema einer erfindungsgemäßen Vorrichtung; Fig. 2 bis 6 zeigen schematisch Bilder, die auf unterschiedlichen Verfahrensstufen vorliegen können.

Die in Fig. 1 schematisch mit 3 bezeichnete erfindungsgemäße Vorrichtung umfasst eine Anzahl von Aufnahmeeinrichtungen $K_1.....K_k$, mit denen unterschiedliche Bilder des zu untersuchenden Gegenstandes 1 aufgenommen werden. Bei diesen Aufnahmeeinrichtungen kann es sich um UV-Kameras, Infrarot-Kameras, Kameras für verschiedene Beleuchtungen bzw. zur Aufnahme unter verschiedenen Beleuchtungswinkeln und/oder Lichtfrequenzen, Scanner, Zeilenkameras, VideoKameras od.dgl. handeln.

Mit diesen Aufnahmeeinrichtungen $K_1.....K_k$ können Bilder des Gegenstandes 1 unter verschiedenen Wellenlängen, unter unterschiedlichen Aufnahmewinkeln, in Form von Durchlichtbildern und/oder unter unterschiedlichen Beleuchtungswinkeln aufgenommen werden. Es ist durchaus möglich, auch andere Bilder des Gegenstandes 1 mit diesen Aufnahmeeinrichtungen aufzunehmen.

Die aufgenommenen Bilder werden zweckmäßigerweise in einem oder mehreren Speicher(n) 12 als Ist-Bilder $A_1.....A_k$ des Gegenstandes 1 zwischengespeichert.

Es ist des weiteren vorteilhaft, wenn zumindest ein bis eine Anzahl von Speicher(n) 12 vorgesehen ist, in denen Soll-Bilder $S_1.....S_s$ zur Verfügung gestellt werden; bei diesen Soll-Bildern kann es sich um Bilder des Gegenstandes handeln oder um ausgewählte Bilder, so wie sie zur Durchführung des erfindungsgemäßen Verfahrens als zweckmäßig erachtet werden. Dabei kann vorgesehen sein, dass als Soll-Bilder $S_1.....S_s$ Bilder mit Soll-Grauwerten, Soll-Farbwerten und/oder anderen Soll-Merkmalswerten, z.B. Kantenintensitäten, lokalen Minima oder Maxima od.dgl., Bilder mit maximal oder minimal erlaubten Grauwerten, Farbwerten und/oder anderen maximalen oder minimalen Merkmalswerten, Bilder mit maximal erlaubten Abweichungswerten oder Bilder mit Gewichtungswerten od.dgl. zur Merkmalsextraktion zur Verfügung gestellt bzw. herangezogen werden.

Aus den in den Speichern 12 gespeicherten Ist-Bildern $A_1.....A_k$ und den in den Speichern 11 enthaltenen Soll-Bildern $S_1.....S_s$ werden nunmehr unter Zuhilfenahme von Extraktionsfunktionen $E_1.....E_m$ für jeweils einander entsprechende und/oder einander zugeordnete Bildpunkte die jeweiligen Merkmale bzw. Merkmalswerte dieser Bildpunkte extrahiert und damit eine vorgegebene Anzahl von Merkmalsbildern $M_1.....M_m$ erstellt, welche Merkmalsbilder in einem bzw. einer entsprechenden Anzahl von Speicher(n) 9 gespeichert werden.

Die vorgesehenen Extraktionsfunktionen $E_1.....E_m$ berücksichtigen die jeweilige vorzunehmende Untersuchung, die Oberfläche sowie die Art, Form, Farbe usw. des Gegenstandes, insbesondere dessen Oberflächenfarbe usw., sowie die gewünschten festzustellenden Fehler.

Es kann vorgesehen sein, dass bei der Erstellung eines Merkmalsbildes $M_1.....M_m$, die den einzelnen Bildpunkten der aufgenommenen Bilder und gegebenenfalls den Soll-Bildern $S_1.....S_s$ entnommenen Merkmalswerte unverändert übernommen oder bildpunktweise von den herangezogenen Merkmalswerten ein Minimum, ein Maximum, eine Summe, eine gewichtete Summe, eine Differenz von zumindest zwei Merkmalswerten ermittelt wird und/oder auf die Merkmalswerte eine Filterung, z.B. Mittelwertfilterung, Gaußfilterung, Gaborfilterung, Minimumfilterung, Maximumfilterung und/oder eine Bildtransformation, z.B. eine diskrete Kosinustransformation oder eine Wavelet-Transformation angewendet wird. Auch die Anwendung anderer Funktionen ist möglich.

Zweckmäßig ist es, wenn der Ausgang zumindest eines, vorzugsweise einer Anzahl von, insbesondere aller Speicher 12 für die aufgenommenen Bilder $A_1.....A_k$ und gegebenenfalls der Ausgang zumindest eines, vorzugsweise einer Anzahl von, insbesondere aller Speicher 11 für die Soll-Bilder $S_1.....S_s$, an zumindest eine, vorzugsweise eine Anzahl, insbesondere alle, Extraktionseinheiten 10 angeschlossen sind. Des weiteren ist vorzusehen,

- dass jeder Extraktionseinheit 10 ein Speicher 9 für das von ihr erstellte bzw. extrahierte Merkmalsbild zugeordnet bzw. nachgeschaltet ist,

- dass die Extraktionseinheiten 10 zumindest einen Speicher aufweisen, in dem zumindest eine vorgegebene, gegebenenfalls veränderbare, Funktion $E_1.....E_m$ zur Extraktion von Bildmerkmalen aus den aufgenommenen Bildern $A_1.....A_k$ und/oder den Soll-Bildern $S_1.....S_s$ abgespeichert ist und
- dass die Ausgänge zumindest eines oder einer Anzahl von, vorzugsweise aller, Speichers(n) 9 für die Merkmalsbilder $M_1.....M_m$, an die Binarisierungs-Einheit 8 und/oder an den Wertungsbildner 13 angeschlossen sind.

Mit den Merkmalswerten der einzelnen einander entsprechenden und/oder einander zugeordneten Bildpunkte der Merkmalsbilder $M_1.....M_m$ wird unter Verwendung einer Binarisierungs-Funktion Z ein Bild erstellt, in dem die einzelnen Bildpunkte bestimmte Merkmalswerte aufweisen, welche Merkmalswerte der Binarisierung unterworfen werden bzw. es wird überprüft, ob die Merkmalswerte einem vorgegebenen Kriterium entsprechen oder nicht. Es ist vorgesehen, dass mit der Binarisierungs-Funktion Z überprüft bzw. entschieden wird, ob der Merkmalswert eines Bildpunktes oder der Funktionswert von Merkmalswerten entsprechender und/oder zugeordneter Bildpunkte aus mehreren Merkmalsbildern $M_1.....M_m$, z.B. eine gewichtete Summe, eine Summe der Quadrate, ein Maximum od.dgl. von einem oder mehreren Merkmalswert(en), in einem vorgegebenen Wertbereich liegt, insbesondere größer oder kleiner als ein vorgegebener Wert ist oder einem vorgegebenen Entscheidungskriterium entspricht. In Abhängigkeit dieser Überprüfung wird die Binarisierung vorgenommen, wobei gegebenenfalls der vorgegebene Wertbereich bzw. das Entscheidungskriterium für jeden oder eine Anzahl von unterschiedlichen Bildpunkt(en) des Merkmalsbildes $M_1.....M_m$ gleich gewählt oder in Abhängigkeit der Koordinaten der Bildpunkte des Merkmalsbildes variiert wird. Dabei kann vorgesehen sein, dass mit der Wertungs-Funktion V aus den den einzelnen Bildpunkten des(r) Merkmalsbildes(r) zugeordneten Merkmalswerten Maxima, Minima, Summen, Mittelwerte und/oder Differenzen gebildet und/oder die Merkmalswerte und/oder diese Ergebnisse gewichtet und/oder potenziert werden. Es ist vorgesehen, dass die Binarisierungs-Einheit 8 einen Speicher aufweist, in dem zumindest eine vorgegebene, vorzugsweise abänderbare, Binarisierungs-Funktion Z abgespeichert ist.

In der Blob-labeling-Einheit 6 wird jedem Bildpunkt des Binär-Bildes B ein Identifikationswert (label) zugeordnet und dieses Bild als Label-Bild L im Speicher 5 gespeichert. Bildpunkte, die im Binärbild den Wert Null haben, bekommen vorteilhafterweise ein spezielles Label, das sie als Hintergrund-Bildpunkte kennzeichnet. Bildpunkte mit dem Wert 1 bekommen eines jener Labels, mit denen jeweils zusammengehörige Regionen von Bildpunkten gekennzeichnet werden, so wie dies bei den bekannten Blob-labeling-algorithmen üblich ist. Zwei Bildpunkte, die im Binär-Bild B den Wert 1 haben, bekommen genau dann das gleiche Label, wenn sie benachbart liegen oder durch eine Kette von jeweils benachbart liegenden Bildpunkten, die alle den Wert 1 haben, verbunden sind. Für den Begriff "benachbart" bzw. "zugeordnet" kann z.B. die Vierer- oder Achter-Verbundenheit verwendet werden; bei der Vierer-Verbundenheit gelten z.B. diejenigen Bildpunkte als benachbart, die direkt übereinander oder nebeneinander liegen. Bei der Achter-Verbundenheit gelten darüber hinaus auch diagonalliegende Bildpunkte als benachbart bzw. einander zugeordnet.

Die mit gleichen Labels bezeichneten Bildpunkte bilden den sogenannten Blob; die Bildpunkte eines Blobs hängen zusammen. Da es jedoch auf die Auswahl der Bildmerkmale mittels der Extraktions-Funktionen $E_1.....E_m$ sowie die auf die Binarisierungs-Funktion Z ankommt, welche die Ausbildung der Blobs beeinflusst, kann durchaus der Fall eintreten, dass nicht alle tatsächlichen zu einem Blob gehörigen Bildpunkte als solche festgestellt werden können oder zu viele Bildpunkte einem Blob zugeordnet werden. Aus diesem Grund wird erfindungsgemäß vorgegangen und es wird eine eigene, von der Binarisierungs-Funktion Z unabhängige Wertungs-Funktion V erstellt. Unter Einsatz der Wertungs-Funktion V werden aus den Merkmalsbildern $M_1.....M_m$, insbesondere unter Aufrechterhaltung der Bildstruktur, Funktions-Bilder V' abgeleitet, indem aus den Merkmalswerten von einander entsprechenden und/oder zugeordneten Bildpunkten einer vorgegebenen Anzahl von Merkmalsbildern mit einer gewählten bzw. vorgegebenen Wertungs-Funktion V ein Funktionswert errechnet und den jeweiligen Bildpunkten des Funktions-Bildes V' zugeordnet wird. Es ist ein Wertungsbildner 13 vorgesehen, mit dem unter Verwendung der Wertungs-Funktion V aus einer Anzahl von Merkmals-Bildern $M_1.....M_m$ für einzelne einander entsprechende und/oder einander zugeordnete Bildpunkte, Bildmerkmale bzw. Merkmalswerte extrahiert werden und ein Funktions-Bild V' errechnet wird. Vorteilhafterweise ist vorgesehen, dass der Wertungsbildner 13 einen Speicher aufweist, in dem zumindest eine, vorzugsweise eine Anzahl von, vorgegebene(n), vorzugsweise abänderbare(n), Wertungs-Funktion(en) V abgespeichert ist.

Dieses Funktions-Bild V' und das jeweilige Label-Bild L werden in einer Recheneinheit 14 unter Anwendung einer Qualitäts-Funktion F miteinander verknüpft. Vorgesehen ist, dass die Recheneinheit 14 zumindest einen Speicher umfasst, in dem zumindest eine vorgegebene, insbesondere abänderbare, Qualitätsfunktion F abgespeichert ist. Dabei werden den einzelnen Bildpunkten der Blobs des Label-Bildes L die Merkmalswerte der entsprechenden und/oder von zugeordneten Bildpunkte(n) des Funktions-Bildes V' zugeordnet bzw. auf diese überschrieben und es wird auf die erhaltenen Bildpunktwerte der Bildpunkte der einzelnen Blobs eine vorgegebene Qualitäts-Funktion F angewendet. Es werden somit den einzelnen Bildpunkten der jeweiligen Blobs die Merkmalswerte der zugeordneten Bildpunkte des Funktions-Bildes V' zugeordnet unter gleichzeitiger Anwendung der Qualitäts- oder Kenn-Funktion F. Diese den Bildpunkten eines Blobs zugeordneten Funktionswerte bzw. Merkmalswerte werden durch die Qualitäts-Funktion F für jeden Blob getrennt miteinander verknüpft. Zweckmäßig ist es dabei, wenn die bzw. alle bei Anwendung der Qualitäts-Funktion F auf die Bildpunktwerte der Bildpunkte des jeweiligen Blobs erhaltenen Teilresultate, z.B. Teilsummen, in einem diesem Blob zugeordneten initialisierbaren Speicher 4 gespeichert werden.

Die Qualitäts-Funktion F berechnet für jeden Blob zumindest einen statistischen Wert, z.B. durch Addition der diesem Blob bzw. dessen Bildpunkten mittels der Wertungs-Funktion V zugeordneten Merkmalswerte des Funktions-Bildes V'. Es ist auch möglich, die Funktionswerte des Funktions-Bildes V' und die Koordinaten der Bildpunkte des Funktions-Bildes V' mit der Qualitäts-Funktion F miteinander zu verknüpfen. Das Label-Bild L bestimmt, welche Bildpunkte wertemäßig miteinander zu verknüpfen sind; es werden immer nur die Werte von Bildpunkten ein und desselben Blobs bzw. Labels verknüpft, z.B. summiert, und bewertet. Im Speicher 4 erfolgt vorerst ein Einspeichern der Teilergebnisse für die einzelnen Blobs, d.h. ein Einspeichern der Funktionswerte der Qualitäts-Funktion F angewandt auf alle Merkmalswerte der bereits bekannten einzelnen bzw. abgearbeiteten Bildpunkte der jeweiligen Blobs. Diese in dem Speicher 4 abgelegten Werte werden mit jedem weiteren, einem Blob zugeordneten Bildpunkt korrigiert, bis alle Bildpunkte abgearbeitet sind und im Speicher 4 für jeden Blob die endgültigen Funktionswerte bzw. die errechneten Qualitätsmaße der Qualitäts-Funktion F gespeichert sind. Die Bildpunkte des Label-Bildes L werden z.B. reihen- oder spaltenweise aufeinanderfolgend abgearbeitet und dabei die Zugehörigkeit der Bildpunkte zu den jeweiligen Blobs berücksichtigt. In der Einheit 2 erfolgt die Gesamtbeurteilung und gegebenenfalls eine Anzeige der Ergebnisse.

Die Qualitäts-Funktion F ordnet jedem Blob einen Funktionswert zu. Sie verknüpft jeweils die Funktionswerte derjenigen Bildpunkte des Funktions-Bildes V', die im zugeordneten Label-Bild L dieselbe Labelnummer aufweisen. Üblicherweise werden mehrere Qualitäts-Funktionen F in der Einheit 14 verwendet. Diese werden im Allgemeinen auf alle Blobs angewendet und für alle Blobs ausgewertet. Im Speicher 4 entstehen dann für jeden Blob mehrere Qualitäts- bzw. Kennwerte.

Die praktische Berechnung der Kennwerte mit der Qualitäts-Funktion F erfolgt im Allgemeinen durch eine bildpunktweise Abarbeitung des Label-Bildes L. Für jeden mit einem gültigen (kein Default) Label versehenen Bildpunkt werden die zugehörigen Qualitäts-Funktionswerte des Blobs im Speicher 4 auf den neuesten Stand gebracht. Im Speicher 4 stehen daher während der Abarbeitung Teilergebnisse, z.B. Teilsummen, die laufend erneuert werden. Erst mit der Abarbeitung des letzten Bildpunktes ist sichergestellt, dass die jeweiligen Gesamtergebnisse, z.B. Gesamtsummen, im Speicher 4 stehen. Die Werte für verschiedene Qualitäts-Funktionen F werden im Speicher 4 gespeichert. Jede Anwendung einer Qualitäts-Funktion F auf einen Blob liefert ein Qualitätsmaß bzw. einen Kennwert.

Ein typisches Beispiel für die Qualitäts-Funktion ist die Summe der Funktions-Werte aus V':

$$F_S(\text{Blob}) = \sum_{Label(\,Bildpunkt\,)=Label(\,Blob\,)} V'(\text{Bildpunkt})$$

(Summe der Bildpunktwerte der Bildpunkte des Wertungsbildes V', die den Bildpunkten des Label-Bildes L entsprechen oder zugeordnet sind.)

Ein anderes Beispiel ist das Maximum:

$$F_m(\text{Blob}) = \max_{Label(\,Bildpunkt\,)=Label(\,Blob\,)} V'(\text{Bildpunkt})$$

(Maximum der Bildpunktwerte der Bildpunkte des Wertungsbildes V', die den Bildpunkten des Label-Bildes L entsprechen oder zugeordnet sind.)

Für die Berechnung der x-Koordinate des Blob-Schwerpunkts wird folgende Kenn-Funktion benötigt.

$$F_x(\text{Blob}) = \sum_{Label(\,Bildpunkt\,)=Label(\,Blob\,)} x(\text{Bildpunkt}) \bullet V'(\text{Bildpunkt})$$

In der Einheit 2 wird dann durch

$$\frac{F_x(\text{Blob})}{F_s(\text{Blob})}$$

die x-Koordinate des Schwerpunkts berechnet. Die blobweisen Funktionswerte für die Qualitäts-Funktion $F_s$ und Kenn-Funktion $F_x$ werden aus dem Speicher 4 entnommen.

Bei sämtlichen vorgesehenen Funktionen handelt es sich um an den jeweiligen Anwendungsfall anpassbare bzw. abänderbare Funktionen; aufgrund der vorgesehenen Wertungs-Funktion V und der vorgesehenen Qualitäts-Funktion F und der Verknüpfung des Label-Bildes L mit dem Funktions-Bild V' ergibt sich die Möglichkeit, die Genauigkeit des Prüfungsverfahrens zu erhöhen bzw. die Zuordnung von Bildpunkten zu Blobs zu verfeinern und differenzierte Aussagen über den Gegenstand treffen zu können. Vorteilhaft ist es, wenn der Recheneinheit 14 ein vorzugsweise initialisierbarer Ergebnisspeicher 4 nachgeschaltet ist, zur Abspeicherung der für die einzelnen Blobs mit der Qualitäts- bzw. Kenn-Funktion F erhaltenen Qualitäts- bzw. Kennmaße bzw. gegebenenfalls von Zwischenergebnissen dieses Rechenschrittes, insbesondere zur blobweisen Verknüpfung, vorzugsweise Aufsummierung, der für die einzelnen Bildpunkte der jeweiligen Blobs mit der Wertungs-Funktion V ermittelten Funktionswerte.

In der Einheit 2 für die Gesamtbeurteilung können abschließende Berechnungen durchgeführt werden. Z.B. kann in dieser Einheit 2 für jeden Blob die Summe der Funktionswerte des Funktions-Bildes V' und die Summe der Funktionswerte des Funktions-Bildes V' jeweils multipliziert mit der Bildpunktkoordinate des zugeordneten Bildpunktes stehen. In dieser Einheit 2 könnte sodann für jeden Blob der letztere Wert durch den ersteren Wert dividiert werden, womit man die Koordinaten des Schwerpunkts des Blobs erhält. Diese Vorgangsweise kann für die X- und/oder für die Y-Koordinate des Schwerpunktes vorgenommen werden. Auch das minimale und/oder maximale Trägheitsmoment bzw. die zugehörigen Achsen lassen sich berechnen, sofern im Speicher 4 die entsprechenden Werte enthalten sind. Es können in dem Speicher 4 auch Sortierungen betreffend die einzelnen Gegenstände, z.B. nach Größe, Länge, Breite, Höhe, Lage usw. vorgenommen werden, indem eine entsprechende Auswertung der einzelnen Blobs vorgenommen wird.

Die Einheit 2 für die Gesamtbeurteilung kann auch auf die untersuchten Gegenstände Einfluss nehmen, z.B. ein Aussortieren oder eine Stellbewegung für die Gegenstände bewirken.

Die Ist-Bilder $A_1.....A_k$ und/oder die Soll-Bilder $S_1.....S_s$ und/oder die MerkmalsBilder $M_1.....M_m$ und/oder das Label-Bild und/oder das Funktions-Bild V' müssen nicht unbedingt den gleichen Bildmaßstab bzw. die gleiche Auflösung haben; es müssen jedoch die Koordinatentransformationen bekannt sein, mit denen die Bildpunkte der unterschiedlichen Bilder einander zugeordnet werden können, um die die Bildstruktur bestimmenden Merkmale in den einzelnen Bildern einander zuordnen zu können bzw. die Bildstruktur aufrechtzuerhalten.

Im folgenden ist die Erfindung anhand von Ausführungsbeispielen näher erläutert.

***Überprüfung von Druckwerken mit einer Grauwert-Kamera***

Aufgabenstellung

Als Gegenstand ist ein Bild vorgesehen, das auf Druckfehler untersucht werden soll. Dazu werden verschiedene Merkmale extrahiert und mit den Soll-Merkmalen verglichen. Zu hohe Abweichungen bzw. zu große Anhäufungen von Abweichungen gelten als Fehler.

Erfindungsgemäße Vorgangsweise

Mit einer digitalen Grauwertkamera $K_1$ wird das zu prüfende Bild aufgenommen und das Ist-Bild $A_1$ gespeichert. Mit der Extraktionseinheit $E_1$ wird dieses Bild durch Anwendung eines Gaußfilters geglättet und um den Faktor 2 in x- und y-Richtung reduziert (nur jeder zweite Merkmalswert in jeder zweiten Zeile wird genommen). Von diesen Merkmalswerten werden die Soll-Merkmalswerte von entsprechend zugeordneten Bildpunkten eines Soll-Bildes $S_1$ aus dem Speicher 11 abgezogen und die Absolutbeträge davon im Speicher 9 als Bildpunkte des Merkmalsbildes $M_1$ gespeichert.

Die Extraktionseinheit $E_2$ extrahiert vertikale Kanten. Es wird auf das Ist-Bild $A_2$ ein vertikaler Sobelfilter und anschließend ein 2x2-Maximumfilter angewandt. Das Bild wird wieder um den Faktor 2 reduziert. Hohe Werte markieren die Position von vertikalen Kanten. Von diesen Merkmalswerten werden die im Speicher 11 gespeicherten Soll-Merkmalswerte des Sollbildes $S_2$ abgezogen und die Absolutbeträge davon im Speicher 9 als Merkmalsbild $M_2$ gespeichert.

Analog berechnet die Extraktionseinheit $E_3$ für horizontale Kanten die Abweichungen vom Soll-Bild $S_3$ und speichert deren Absolutbeträge im Merkmalsbild $M_3$.

Die Werte in den Speichern 11 für die Soll-Bilder $S_1$ bis $S_3$ müssen natürlich zuvor mit entsprechend berechnet bzw. festgelegt worden sein. Sie können z.B. aus der Aufnahme eines fehlerfreien Bildes berechnet werden.

Die Merkmalsbilder $M_1$ bis $M_3$ im Speicher 9 haben alle die gleiche Auflösung, da bei ihrer Entstehung aus dem Ist-Bild $A_1$ jeweils der Reduktionsfaktor 2 angewandt wurde.

Die Funktion Z erzeugt aus den 3 Merkmalsbildern $M_1$ bis $M_3$ ein Binärbild B mit der gleichen Auflösung. Der Wert eines Bildpunkts im Binärbild B hat in diesem Fall entsprechend der eingesetzten Binarisierungs-Funktion Z genau dann den Wert 1, wenn der zugehörige Merkmalswert im Merkmalsbild $M_1$ größer als der Wert $m_1$ ist und/oder der zugehörige Merkmalswert des Merkmalsbildes $M_2$ größer als $m_2$ ist und/oder der zugehörige Merkmalswert des Merkmalsbildes $M_3$ größer als $m_3$ ist. Die Werte $m_1$ bis $m_3$ werden vorgegeben. Mit ihnen kann gesteuert werden, wie stark bei der anschließenden Blobanalyse die Blobs zusammenwachsen sollen.

In der Einheit 6 wird aus dem Binärbild B das Labelbild L berechnet und im Speicher 5 abgelegt. Für das Bloblabeling wird als Nachbarschaftsbeziehung die 8-Verbundenheit verwendet.

Die Funktion V verknüpft die 3 Merkmalsbilder $M_1$ bis $M_3$. Gemäß der vorgegebenen Funktion V wird von den Merkmalswerten von $M_1$ der Wert $n_1$ abgezogen, von den Merkmalswerten von $M_2$ der Wert $n_2$ abgezogen und von den Merkmalswerten von $M_3$ wird der Wert $n_3$ abgezogen. Von diesen Differenzwerten wird das Maximum genommen. Falls dieses kleiner als 0 ist, wird der Wert 0 weitergeleitet. Die Werte $n_1$ bis $n_3$ werden vorgegeben. Mit ihnen kann gesteuert werden, wie groß die Abweichungen zu den Soll-Bildern sein dürfen, bevor sie als Fehler gewertet werden. Üblicherweise sind die Werte $n_1$ bis $n_3$ größer als die Werte $m_1$ bis $m_3$.

Fig. 2 zeigt ein Beispiel in dem die Wirkung der Funktionen Z und V verglichen wird. Die Bildpunkte, für die die Funktion V einen Funktionswert größer als 0 liefert, sind schwarz. Die Bildpunkte, die in B (durch die Funktion Z) auf 1 gesetzt sind, sind grau dargestellt, sofern sie nicht durch schwarze überdeckt werden. Alle anderen Bildpunkte sind weiß.

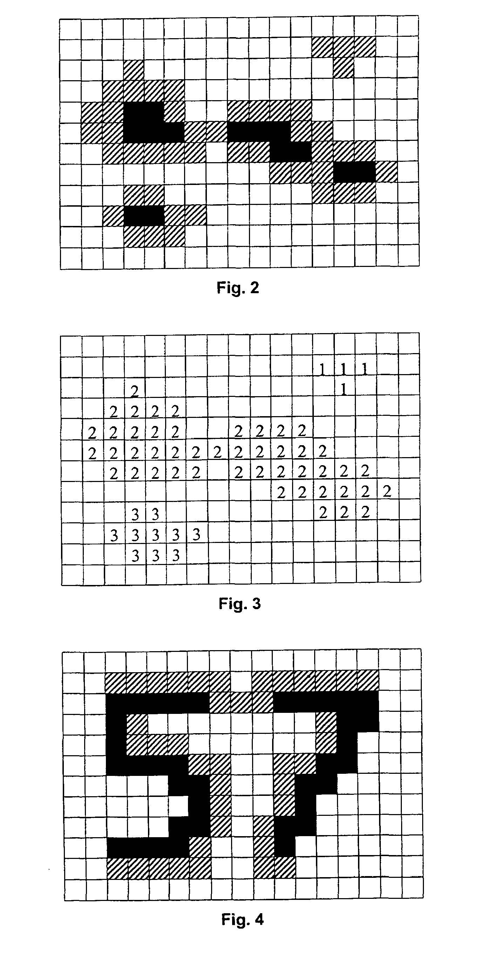

In der Einheit 6 wird das Bloblabeling durchgeführt. Das Bild im Speicher 5 entspricht dem der Fig. 3. Es wurden 3 Blobs gefunden und die Labelnummern 1 bis 3 dafür vergeben.

Die Qualitäts-Funktion F berechnet für jeden einzelnen Blob statistische Werte, wie z.B. die Anzahl der Bildpunkte im Blob, die Summe der Werte jedes Bildpunktes eines Blobs od.dgl. Es werden dabei aber nur jene Bildpunkte berücksichtigt, die in Fig. 2 schwarz sind, für die also die Funktion V einen Funktionswert größer als 0 liefert. Für den Blob rechts oben, dem z.B. Label 1 zugeordnet wurde, sind dies gar keine Bildpunkte. Für den mittleren Bloblabel 2 sind dies zwölf und für den unteren Bloblabel 3 sind dies zwei Bildpunkte. Die Funktion F kann z.B. auch die Summe der Bildpunkt-Werte, die von der Wertungs-Funktion V geliefert werden bzw. im Funktions-Bild V' enthalten sind, blobweise summieren. Die Zwischensummen werden im Speicher 4 für jeden Blob getrennt abgelegt. Die Labelnummern dienen als Indizes. Am Ende wertet die Einheit 2 diese Summen aus. Ist z.B. die Summe der aus dem Funktions-Bild V' abgeleiteten Funktionswerte oder die Anzahl der Bildpunkte für einen Blob zu groß, wird das Bild als fehlerhaft eingestuft.

### *Oberflächenprüfung von Werkstücken*

Aufgabenstellung

Die Oberfläche von stählernen Werkstücken (z.B. Schienen) soll auf Fehler, wie unerlaubte Vertiefungen (Scharten) untersucht werden. Durch stellenweise vorhandenen Zunder ist auch bei fehlerfreien Werkstücken mit hellen und dunklen Stellen zu rechnen.

Erfindungsgemäße Vorgangsweise

Das Werkstück 1 wird mit gleichförmiger Geschwindigkeit an zwei Zeilenkameras $K_1$ und $K_2$ vorbeigeführt und die gelieferten Bildpunktwerte in den Speichern 12 als Ist-Bilder $A_1$ bzw. $A_2$ abgelegt. Das Werkstück 1 wird dabei von verschiedenfarbigen Beleuchtungsquellen angestrahlt. Die erste Beleuchtung ist grün und fällt in einem spitzen Winkel auf das Werkstück. Die zweite Beleuchtung ist rot und fällt aus der entgegengesetzten Richtung auf das Werkstück, sodass dadurch unterschiedliche Schattenbilder entstehen. Der ersten Kamera ist ein Filter vorgeschaltet, der nur grünes Licht durchlässt. Die zweite Kamera nimmt analog dazu nur rotes Licht auf.

Die Extraktionseinheit $E_1$ berechnet das Differenzbild von $A_1$ und $A_2$ und speichert es im Speicher 9 als Merkmalsbild $M_1$. Dies geschieht mit der Formel bzw. Funktion $a_1 - g \ast a_2 + d$, wobei $a_1$ die Werte von $A_1$ und $a_2$ die Werte von $A_2$ repräsentieren. Die konstanten Werte g und d müssen vorgegeben werden. Mit ihnen sollen die zu erwartenden unterschiedlichen Reflexionseigenschaften der grünen und roten Beleuchtung ausgeglichen werden. Bei fehlerfreien Werkstücken sollen die Werte im zu berechnenden Differenzbild möglichst nahe bei 0 liegen. g und d werden vorab durch Versuche entsprechend bestimmt, um dies zu erreichen.

Mit der Funktion Z wird jedem Bildpunkt von $M_1$, dessen absolut genommener Merkmalswert größer ist als der vorgegebene Wert c ist, der Binärwert 1 zugeordnet. Allen anderen Bildpunkten aus $M_1$ wird der Wert 0 zugeordnet. Das Binärbild B wird im Speicher 7 gespeichert und in der Blob-labeling-Einheit 6 zu einem gelabelten Blobbild L umgewandelt.

Der Wertungsbildner 13 bzw. die Wertungsfunktion V subtrahiert von den aus $M_1$ abgeleiteten bzw. kommenden absolut genommenen Merkmalswerten einen vorgegebenen Wert e und leitet die erhaltenen Werte weiter zum Rechner 14. Dabei entstehende Differenzwerte, die kleiner als 0 sind, werden auf 0 gesetzt.

Der Rechner 14 bzw. die Qualitäts-Funktion F summiert interessante statistische Werte für jeden Blob (bzw. jede Labelnummer) auf und speichert diese im Speicher 4. Interessant sind z.B. die Anzahl der vom Funktions-Bild V' bzw. vom Wertungsbildner 13 kommenden Werte, die größer sind als 0, die Summe der von diesem kommenden Werte, minimale und maximale Koordinaten (um für jeden Blob das umschließende Rechteck zu bestimmen), usw.

In der Auswerteeinheit 2 werden diese Blobwerte beurteilt. Sind sie zu groß liegt vermutlich ein Fehler vor. Die Koordinaten des betreffenden Blobs werden gespeichert. Zusammen mit den anderen Blobwerten bilden sie das Ergebnis.

### *Schwerpunktbestimmung von Ziffern*

Aufgabenstellung

In einer Grauwert-Aufnahme soll die genaue Position von aufgedruckten Ziffern ermittelt werden. Diese Information wird z.B. für ein Ziffernerkennungsprogramm benötigt. Die Druckfarbe der Ziffern ist dunkler als der Hintergrund, auf dem sie gedruckt sind.

Erfindungsgemäße Vorgangsweise

Jede Ziffer wird dabei als eigenständiger Blob aufgefasst und ihr bzw. sein Schwerpunkt berechnet. Durch den Schwerpunkt ist die Lage genau bestimmt.

Die digitale Kamera $K_1$ legt das aufgenommene Ist-Bild $A_1$ im Speicher 12 ab. $E_1$ ordnet jedem Bildpunktwert einen neuen Wert zu und speichert diesen im Merkmalsbild $M_1$. Bildpunkte aus $A_1$, deren Wert kleiner ist als der vorgegebene Wert a, haben im Merkmalsbild $M_1$ den Wert 0 (schwarz). Bildpunkte mit einem Wert größer als der vorgegebene Wert b haben in $M_1$ den Wert 255 (weiß). Werte x, die zwischen a und b liegen, werden auf die Funktionswerte (x - a) * 255 / (b - a) abgebildet. Bei richtiger Wahl der Parameter a und b wird der Hintergrund einheitlich weiß, die Kernbereiche der Ziffern einheitlich schwarz und Übergänge bekommen entsprechende Grauwerte.

Fig. 4 zeigt ein einfaches Beispiel für $M_1$ mit zwei benachbarten Ziffern. Mit der Binarisierungseinheit 8 werden alle Bildpunkte aus $M_1$, die kleiner als der vorgegebener Wert c sind, auf 1 gesetzt und im Speicher 7 gespeichert. Wählt man c zu groß, besteht wie in Fig. 4 dargestellt, die Gefahr, dass die beiden Ziffern zu einem Blob zusammenwachsen. Deshalb wird c eher klein gewählt, sodass nur die schwarzen Bildpunkte den Wert 1 zugewiesen bekommen.

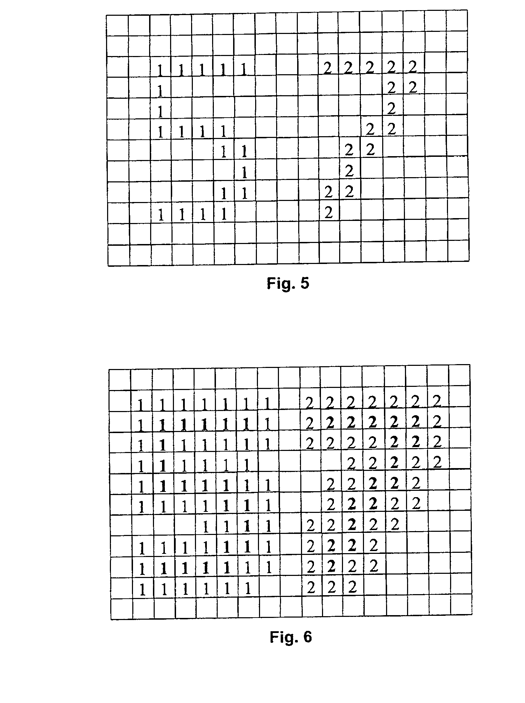

In der Blob-labeling-Einheit 6 wird zunächst das übliche Bloblabeling durchgeführt. Dies führt zu einem gelabelten Bild L gemäß Fig. 5. Nicht gelabelte Bildpunkte bekommen den Defaultlabelwert 0.

Anschließend wird auf dieses Bild ein 3x3-Maximumfilter angewandt, wodurch die Blobs vergrößert werden (Fig. 6). Dieses Labelbild L wird im Speicher 5 gespeichert. Durch die Vergrößerung wird erreicht, dass nun auch die grauen Bildpunkte (Fig. 3) zum Blob gehören. Dies ist zweckmäßig, da dadurch die Genauigkeit der Lagebestimmung erhöht wird.

Der Wertungsbildner 13 weist jedem Merkmalswert x aus $M_1$ den neuen Wert 255-x zu. Das Bild wird dadurch invertiert zum Funktions-Bild V'. In der Recheneinheit 14 wird nun der Schwerpunkt des jeweiligen Blobs berechnet. Dazu werden für jeden Blob die Funktionswerte des Funktions-Bildes V' mit der Qualitäts-Funktion F aufsummiert; die Summe wird im Speicher 4 gespeichert. Gleiches geschieht mit den Produkten aus den Funktionswerten der jeweiligen Bildpunkte des Funktions-Bildes V' und den zugehörigen x-Koordinaten sowie mit den Produkten aus den Funktionswerten von V' und den zugehörigen y-Koordinaten.

Die Koordinaten der Blob-Schwerpunkte werden in der Auswerteeinheit 2 aus diesen Summenwerten berechnet. Dazu müssen für jeden Blob die beiden letzteren Summen durch die erstere dividiert werden. Die sich daraus ergebenden Koordinatenpaare bilden das Ergebnis.

Zusätzlich besteht z.B. noch die Möglichkeit, Blobs auszusieben, die zu groß oder zu klein sind. So kommen Blobs, die auf Grund ihrer Größe keine Ziffern sein können, nicht in die Ergebnisliste.

Die beschriebene Methode funktioniert in gleicher Weise auch für Buchstaben und andere Zeichen. Bedingung ist allerdings, dass jedes Zeichen aus zusammenhängenden Bildpunkten besteht, die Zeichen untereinander aber getrennt sind, damit pro Zeichen genau ein Blob entstehen kann.

### Patentansprüche

1. Verfahren zur Prüfung bzw. Untersuchung von Gegenständen (1), bei dem mit zumindest einer Aufnahmeeinrichtung ($K_1$.....$K_k$), vorzugsweise einem elektronenoptischen Aufnahmegerät, eine Anzahl von Bildern des Gegenstandes (1), insbesondere desselben Gegenstandsbereiches, vorzugsweise gleichzeitig, aufgenommen wird und diese Bilder unter Einsatz eines Blob-labeling-algorithmus ausgewertet werden,

   - wobei aus einer vorgegebenen Anzahl der aufgenommenen, gegebenenfalls zwischengespeicherten, Bilder

$(A_1.....A_k)$, insbesondere bildpunktweise, jeweils unter Einsatz von zumindest einer vorgegebenen Extrahierungs-Funktion $(E_1.....E_m)$ eine vorgegebene Anzahl von vorgegebenen Bildmerkmalen bzw. Merkmalswerten extrahiert und damit, insbesondere unter Aufrechterhaltung der Bildstruktur, eine vorgegebene Anzahl von Merkmalsbildern $(M_1.....M_m)$ erstellt wird,

- und aus den Merkmalswerten von einander entsprechenden und/oder zugeordneten Bildpunkten einer vorgegebenen Anzahl von Merkmalsbildern $(M_1.....M_m)$ mit einer vorgegebenen Binarisierungs-Funktion (Z) binäre Funktionswerte berechnet werden und ein Binär-Bild (B) erstellt wird, **dadurch gekennzeichnet,**

- **dass** auf das erhaltene Binär-Bild der Blob-labeling-algorithmus angewendet wird und ein Label-Bild (L) erstellt, vorzugsweise zwischengespeichert, wird,

- **dass** aus den Merkmalsbildern $(M_1.....M_m)$, insbesondere unter Aufrechterhaltung der Bildstruktur, Funktions-Bilder (V') abgeleitet werden, indem aus den Merkmalswerten von einander entsprechenden und/oder zugeordneten Bildpunkten einer vorgegebenen Anzahl von Merkmalsbildern mit einer vorgegebenen Wertungs-Funktion (V) ein Funktionswert errechnet und den jeweiligen Bildpunkten der Funktions-Bilder (V') zugeordnet wird,

- **dass** den einzelnen Bildpunkten der Blobs des Label-Bildes (L) die funktionswerte der entsprechenden und/oder zugeordneten Bildpunkte der Funktions-Bilder (V') zugeordnet oder auf diese überschrieben werden und auf die erhaltenen Bildpunktwerte der Bildpunkte der einzelnen Blobs zumindest eine vorgegebene Qualitäts- oder Kenn-Funktion (F) angewendet wird und

- **dass** die mit der zumindest einen Qualitäts- bzw. Kenn-Funktion (F) für die einzelnen Blobs errechneten Qualitäts- oder Kennmaße als Ergebnis der Prüfung ausgewertet oder beurteilt werden.

2. Verfahren nach Anspruch 1, **dadurch gekennzeichnet, dass** die Binarisierungs-Funktion (Z) und die Wertungs-Funktion (V) unterschiedliche und unabhängige Funktionen sind und/oder jeweils auf Merkmalswerte von entsprechenden und/oder zugeordneten Bildpunkten aus einer unterschiedlichen Menge von Merkmalsbildern $(M_1.....M_m)$ angewendet werden.

3. Verfahren nach Anspruch 1 oder 2, **dadurch gekennzeichnet, dass** eine Anzahl von Soll-Bildern $(S_1.....S_s)$, insbesondere gespeichert, zur Verfügung gestellt wird, dass vorgegebene Bildmerkmale bzw. Merkmalswerte von Bildpunkten einer vorgegebenen Anzahl von Soll-Bildern mit den Extrahierungs-Funktionen $(E_1.....E_m)$ extrahiert werden und dass die Merkmalsbilder $(M_1.....M_m)$ mit diesen extrahierten Bildmerkmalen zusätzlich zu den mit den Bildmerkmalen der aufgenommenen Bilder erstellt werden und/oder,

- dass unterschiedliche Bilder des Gegenstandes (1), insbesondere gleichzeitig, unter verschiedenen Wellenlängen, unter unterschiedlichen Aufnahmewinkeln, in Form von Durchlichtbildern und/oder unter unterschiedlichen Beleuchtungswinkeln aufgenommen und zur Extraktion herangezogen werden und/oder,

- dass als Soll-Bilder $(S_1.....S_s)$ Bilder mit Soll-Grauwerten, Soll-Farbwerten und/oder anderen Soll-Merkmalswerten, z.B. Kantenintensitäten, lokalen Minima oder Maxima od.dgl., Bilder mit maximal oder minimal erlaubten Grauwerten, Farbwerten und/oder anderen maximalen oder minimalen Merkmalswerten, Bilder mit maximal erlaubten Abweichungswerten oder Bilder mit Gewichtungswerten od.dgl. zur Merkmalsextraktion zur Verfügung gestellt bzw. herangezogen werden.

4. Verfahren nach einem der Ansprüche 1 bis 3, **dadurch gekennzeichnet, dass** die Merkmalsbilder $(M_1.....M_m)$ als Bildmerkmale bzw. Merkmalswerte der einzelnen Bildpunkte Helligkeitswerte, Intensitätswerte, Kantenintensitätswerte, Kantenrichtungen und/oder insbesondere gewichtete Abweichungen von Toleranzwerten od.dgl. enthalten und/oder,

- dass bei der Erstellung eines Merkmalsbildes $(M_1.....M_m)$, die den aufgenommenen Bildern und gegebenenfalls den Soll-Bildern $(S_1.....S_s)$ entnommenen Merkmalswerte der einzelnen Bildpunkte unverändert übernommen werden oder bildpunktweise von den herangezogenen Merkmalswerten ein Minimum, ein Maximum, eine Summe, eine gewichtete Summe, eine Differenz von zumindest zwei Merkmalswerten ermittelt wird und/oder auf die Merkmalswerte eine Filterung, z.B. Mittelwertfilterung, Gaußfilterung, Gaborfilterung, Minimumfilterung, Maximumfilterung, und/oder eine Bildtransformation, z.B. eine diskrete Kosinustransformation oder eine Wavelet-Transformation angewendet wird und/oder,

- dass einem Bildpunkt eines Merkmalsbildes $(M_1.....M_m)$ der Merkmalswert von entsprechenden bzw. zugeordneten Bildpunkten von zumindest einem aufgenommenen Bild und gegebenenfalls zumindest einem Sollbild zugeordnet wird und/oder dass bei der Zuordnung von Bildpunkten auch benachbarte Bildpunkte berücksichtigt werden.

5.	Verfahren nach einem der Ansprüche 1 bis 4, **dadurch gekennzeichnet, dass** mit der Binarisierungs-Funktion (Z) überprüft bzw. entschieden wird, ob der Merkmalswert eines Bildpunktes eines Merkmalsbildes ($M_1$.....$M_m$) oder der Funktionswert von Merkmalswerten entsprechender und/oder zugeordneter Bildpunkte aus mehreren Merkmalsbildern ($M_1$.....$M_m$), z.B. eine gewichtete Summe, eine Summe der Quadrate, ein Maximum od.dgl. von einem oder mehreren Merkmalswert(en), in einem vorgegebenen Wertbereich liegt, insbesondere größer oder kleiner als ein vorgegebener Wert ist, oder einem vorgegebenen Entscheidungs-Kriterium entspricht, und dass in Abhängigkeit dieser Überprüfung die Binarisierung vorgenommen wird, wobei gegebenenfalls der vorgegebene Wertbereich bzw. das Entscheidungskriterium für jeden oder eine Anzahl von Bildpunkte(n) des Merkmalsbildes ($M_1$.....$M_m$) gleich gewählt oder in Abhängigkeit der Koordinaten der Bildpunkte des Merkmalsbildes variiert wird.

6.	Verfahren nach einem der Ansprüche 1 bis 5, **dadurch gekennzeichnet, dass** mit der Wertungs-Funktion (V) aus den den einzelnen und/oder den zugeordneten Bildpunkten des(r) Merkmalsbildes(r) ($M_1$.....$M_m$) zugeordneten Merkmalswerten Maxima, Minima, Summen, Mittelwerte und/oder Differenzen gebildet und/oder die Merkmalswerte und/oder diese Ergebnisse gewichtet und/oder potenziert werden und/oder,

- dass zur Ermittlung eines Qualitäts- oder Kennmaßes mit zumindest einer Qualitäts- oder Kenn-Funktion (F) für die einzelnen Blobs Maxima, Minima, gewichtete Summen und/oder die Summe der Quadrate für die mit der Wertungs-Funktion (V) erhaltenen Funktionswerte der einzelnen Bildpunkte der Blobs errechnet werden.

7.	Verfahren nach einem der Ansprüche 1 bis 6, **dadurch gekennzeichnet, dass** auf alle Bildpunktwerte der vorhandenen Blobs eines Label-Bildes (L) dieselbe Qualitäts- bzw. Kenn-Funktion (F) angewendet wird.

8.	Verfahren nach einem der Ansprüche 1 bis 7, **dadurch gekennzeichnet, dass** eine Anzahl, vorzugsweise alle, bei Anwendung der Qualitäts- oder Kenn-Funktionen (F) auf die Bildpunktwerte der Bildpunkte des jeweiligen Blobs erhaltenen Funktionswerte miteinander verknüpft, vorzugsweise in einem diesem Blob zugeordneten, initialisierbaren Speicher (4), vorzugsweise aufsummiert werden und/oder,

- dass bei Anwendung zumindest einer Qualitäts- oder Kenn-Funktion (F) die Koordinaten der Bildpunkte der Blobs miteinbezogen werden, insbesondere die den einzelnen Bildpunkten der Blobs zugeordneten Funktionswerte mit den Koordinaten multipliziert werden.

9.	Vorrichtung zur Prüfung bzw. Untersuchung von Gegenständen (1) mit zumindest einer Aufnahmeeinrichtung ($K_1$.....$K_k$), z.B. einem elektronenoptischen Aufnahmegerät, zur Aufnahme einer Anzahl von Bildern ($A_1$.....$A_k$) des Gegenstandes (1), insbesondere desselben Gegenstandsbereiches, und mit einer Auswerteeinheit (2), in der diese Bilder unter Einsatz eines Blob-labeling-algorithmus ausgewertet werden, insbesondere zur Durchführung des Verfahrens nach einem der Ansprüche 1 bis 8,

- wobei die Vorrichtung (3) zumindest eine Extraktionseinheit (10) aufweist, mit der aus einer vorgegebenen Anzahl der aufgenommenen, gegebenenfalls zwischengespeicherten, Bilder ($A_1$.....$A_k$) jeweils eine vorgegebene Anzahl von vorgegebenen Bildmerkmalen extrahiert und damit eine vorgegebene Anzahl von Merkmalsbildern ($M_1$.....$M_m$) erstellt wird,
- und der zumindest einen Extraktionseinheit (10) zumindest eine Binarisierungs-Einheit (8) nachgeschaltet ist, in der auf die Merkmalswerte einander entsprechender und/oder zugeordneter Bildpunkte einer vorgegebenen Anzahl von Merkmalsbildern ($M_1$.....$M_m$) jeweils eine Binarisierungs-Funktion (Z) angewendet und jeweils ein resultierender binärer Funktionswert für die einzelnen Bildpunkte berechnet und ein Binär-Bild (B) erstellt wird, d**adurch gekennzeichnet**,
- dass der Binarisierungs-Einheit (8) eine Blob-labeling-Einrichtung (6) nachgeordnet ist, in der auf das erhaltene Binär-Bild der Blob-labeling-algorithmus angewendet wird und ein Label-Bild (L) erstellt, vorzugsweise zwischengespeichert, wird,
- dass der zumindest einen Extraktionseinheit (10) ein Wertungsbildner (13) nachgeschaltet ist, mit dem aus den Merkmalsbildern ($M_1$.....$M_m$) Funktionsbilder (V') abgeleitet werden, indem aus den Merkmalswerten von einander entsprechenden und/oder zugeordneten Bildpunkten einer vorgegebenen Anzahl von Merkmalsbildern ($M_1$.....$M_m$) nach einer vorgegebenen Wertungs-Funktion (V) ein Funktionswert für den jeweiligen Bildpunkt errechnet und damit ein Funktions-Bild (V') erstellt wird.
- dass an die Blob-labeling-Einheit (6) und an den Wertungsbildner (13) eine Recheneinheit (14) angeschlossen ist, in der für jeden einzelnen Blob die Funktionswerte und/oder Koordinaten der entsprechenden und/oder zugeordneten Bildpunkte der Funktions-Bilder (V') unter Anwendung zumindest einer vorgegebenen Qualitäts- bzw. Kenn-Funktion (F) verknüpft und damit Qualitäts- oder Kennmaße für die einzelnen Blobs ermittelt werden, und

- dass an die Recheneinheit (14) eine Auswerteeinheit (2) angeschlossen ist, in der das für die jeweiligen Blobs errechneten Qualitäts- oder Kennmaße als Ergebnis der Prüfung ausgewertet und beurteilt werden.

10. Vorrichtung nach Anspruch 9, **dadurch gekennzeichnet, dass** der Recheneinheit (14) ein vorzugsweise initialisierbarer Ergebnisspeicher (4) nachgeschaltet ist, zur Abspeicherung der für die einzelnen Blobs mit der Qualitäts- oder Kenn-Funktion (F) erhaltenen Qualitäts- oder Kennmaße oder gegebenenfalls von Zwischenergebnissen dieses Rechenschrittes, insbesondere zur blobweisen Verknüpfung, vorzugsweise Aufsummierung, der für die einzelnen Bildpunkte der jeweiligen Blobs mit der Wertungs-Funktion (V) ermittelten Funktionswerte.

11. Vorrichtung nach Anspruch 9 oder 10, **dadurch gekennzeichnet, dass** der zumindest einen Extraktionseinheit (10) zumindest ein Speicher (9) für die Merkmalsbilder ($M_1$.....$M_m$) nachgeschaltet ist und/oder

- dass der zumindest einen Extraktionseinheit ($E_1$.....$E_m$) zumindest ein Speicher (12) für die aufgenommenen Bilder ($A_1$.....$A_k$) und gegebenenfalls zumindest ein Speicher (11) für die Soll-Bilder ($S_1$.....$S_s$) vorgeschaltet ist und/oder
- dass der Ausgang zumindest eines, vorzugsweise einer Anzahl von, insbesondere aller Speicher (12) für die aufgenommenen Bilder ($A_1$.....$A_k$) und gegebenenfalls der Ausgang zumindest eines, vorzugsweise einer Anzahl von, insbesondere aller Speicher (11) für die Soll-Bilder ($S_1$.....$S_s$), an zumindest eine, vorzugsweise eine Anzahl, insbesondere alle, Extraktionseinheiten (10) angeschlossen sind und/oder
- dass jeder Extraktionseinheit (10) ein Speicher (9) für das von ihr erstellte bzw. extrahierte Merkmalsbild zugeordnet bzw. nachgeschaltet ist und/oder
- dass die Ausgänge zumindest eines oder einer Anzahl von, vorzugsweise aller, Speichers(n) (9) für die Merkmalsbilder ($M_1$.....$M_m$), an die Binarisierungs-Einheit (7) und/oder an den Wertungsbildner (13) angeschlossen sind und/oder
- dass die Extraktionseinheiten (10) zumindest einen Speicher aufweisen, in dem zumindest eine vorgegebene, gegebenenfalls veränderbare, Funktion ($E_1$.....$E_m$) zur Extraktion von Bildmerkmalen aus den aufgenommenen Bildern ($A_1$.....$A_k$) und/oder den Soll-Bildern ($S_1$.....$S_s$) abgespeichert ist und/oder
- dass die Binarisierungs-Einheit (7) einen Speicher aufweist, in dem zumindest eine vorgegebene, vorzugsweise abänderbare, Binarisierungs-Funktion (Z) abgespeichert
- - dass der Wertungsbildner (13) einen Speicher aufweist, in dem zumindest eine, vorzugsweise eine Anzahl von, vorgegebene(n), vorzugsweise abänderbare(n), Wertungs-Funktion(en) (V) abgespeichert ist und/oder
- dass die Recheneinheit (14) zumindest einen Speicher umfasst, in dem zumindest eine vorgegebene, insbesondere abänderbare, Qualitäts- oder Kenn-Funktion (F) abgespeichert ist.

12. Vorrichtung nach einem der Ansprüche 10 bis 11, **dadurch gekennzeichnet, dass** als Aufnahme-Einrichtungen ($K_1$.....$K_k$) Grauwertkameras, Farbkameras, nach Farbkanälen getrennte Kameras, Durchlichtkameras, UV-Kameras, Infrarot-Kameras, Kameras für verschiedene Beleuchtungen oder zur Aufnahme unter verschiedenen Beleuchtungswinkeln und/oder Lichtfrequenzen, Scanner, Zeilenkameras, VideoKameras od.dgl. vorgesehen sind.

## Claims

1. Method for testing or inspection of articles (1) in which with at least one recording device ($K_1$...$K_k$), preferably an electron-optical recording device, a number of images of the article (1), in particular its article areas, are recorded preferably simultaneously and these images analysed using a blob labelling algorithm,

- where from a pre-specified number of recorded images ($A_1$...$A_k$), where applicable temporarily stored, in particular image point by image point using at least one pre-specified extraction function ($E_1$...$E_m$), a pre-specified number of pre-specified image features or feature values are extracted and hence, in particular while maintaining the image structure, a pre-specified number of feature images ($M_1$...$M_m$) is produced,
- and from the feature values of mutually corresponding and/or allocated image points of a pre-specified number of feature images ($M_1$...$M_m$), using a pre-specified binarisation function (Z) binary function values are calculated and a binary image (B) produced,
**characterised in that**
- the blob labelling algorithm is applied to the resulting binary image and a label image (L) produced, preferably temporarily stored,
- that from the feature images ($M_1$...$M_m$) in particular while maintaining the image structure, function images (V') are derived **in that** from the feature values of mutually corresponding and/or allocated image points of a pre-specified number of feature images, using a pre-specified evaluation function (V) a function value is calculated and allocated to the respective image points of the function images (V').

- that the function values of the corresponding and/or allocated image points of the function images (V') are allocated to or overwritten over the individual image points of the blobs of the label image (L) and at least one pre-specified quality or key function (F) is applied to the resulting image point values of the image points of the individual blobs, and
- that the quality or key values resulting from the at least one quality or key function (F) for the individual blobs are analysed or assessed as a result of the test.

2. Method according to claim 1, **characterised in that** the binarisation function (Z) and the evaluation function (V) are different and independent functions and/or are applied to feature values of corresponding and/or allocated image points from a different quantity of feature images ($M_1...M_m$).

3. Method according to claim 1 or 2, **characterised in that** a number of nominal images ($S_1...S_s$), in particular stored, are provided, that pre-specified image features or feature values of image points are extracted from a pre-specified number of nominal images using the extraction functions ($E_1...E_m$), and that feature images ($M_1...M_m$) are produced with these extracted image features in addition to those with the image features of the recorded images, and/or

- that different images of the article (1) are recorded, in particular simultaneously, at different wavelengths, at different recording angles, in the form of transmitted light images and/or under different illumination angles, and are used for extraction, and/or
- that as nominal images ($S_1...S_s$) are provided or used for feature extraction images with nominal grey values, nominal colour values and/ other nominal feature values e.g. edge intensities, local minima or maxima or similar, images with maximum or minimum permitted grey values, colour values and/or other maximum or minimum feature values, images with maximum permitted deviation values or images with weighting values or similar.

4. Method according to any of claims 1 to 3, **characterised in that** the feature images ($M_1...M_m$) contain as image features or feature values of the individual image points brightness values, intensity values, edge intensity values, edge directions and/or in particular weighted deviations from tolerance values or similar, and/or

- that in the production of a feature image ($M_1...M_m$), the feature values of the individual image points taken from the recorded images and where applicable the nominal images ($S_1...S_s$) are transferred without change, or image point by image point, from the feature values used are determined a minimum, a maximum, a sum, a weighted sum, a difference of at least two feature values, and/or to the feature values is applied a filtration e.g. mean value filtration, Gauss filtration, Gabor filtration, minimum filtration, maximum filtration and/or image transformation, e.g. a discrete cosine transformation or wavelet transformation, and/or
- that allocated to an image point of a feature image ($M_1...M_m$) is the feature value of corresponding or allocated image points of at least one recorded image and where applicable at least one nominal image and/or that in the allocation of image points, adjacent image points are also taken into account.

5. Method according to any of claims 1 to 4,
**characterised in that** the binarisation function (Z) is used to check or decide whether the feature value of an image point of a feature image ($M_1...M_m$) or the function value of feature values of corresponding and/or allocated image points of several feature images ($M_1...M_m$) e.g. a weighted sum, a sum of squares, a maximum or similar of one or more feature value(s), lies in a pre-specified value range, in particular is greater than or less than a pre-specified value or corresponds to a pre-specified decision criterion, and that binarisation is performed as a function of this check, where applicable the pre-specified value range or decision criterion being selected the same for each or a number of image point(s) of the feature image ($M_1...M_m$) or varied as a function of the coordinates of the image points of the feature image.

6. Method according to any of claims 1 to 5,
**characterised in that** with the evaluation function (V), from the feature values allocated to the individual and/or allocated image points of the feature image (s) ($M_1...M_m$) are formed maxima, minima, sums, mean values and/or differences, and/or the feature values and/or these results are weighted and/or potentiated, and/or

- that to determine a quality or key value with at least one quality or key function (F) for the individual blobs, maxima, minima, weighted sums and/or the sum of the squares are determined for the function values obtained with the evaluation function (V) of the individual image points of the blobs.

7. Method according to any of claims 1 to 6,
**characterised in that** the same quality or key function (F) is applied to all image point values of the existing blobs of a label image (L).

8. Method according to any of claims 1 to 7,
**characterised in that** a number of, preferably all, function values obtained on application of the quality or key functions (F) to the image point values of the image points of the blob concerned are linked, preferably cumulated, in an initialisable memory (4) allocated to this blob, and/or

- that on application of at least one quality or key function (F), the coordinates of the image points of the blobs are included, in particular the function values allocated to the individual image points of the blob are multiplied with the coordinates.

9. Device for testing or inspection of articles (1) with at least one recording device ($K_1...K_k$), e.g. an electron-optical recorder, to record a number of images ($A_1...A_k$) of the article (1), in particular its article areas, and with an analysis unit (2) in which these images are analysed using a blob labelling algorithm, in particular for performance of the method according to any of claims 1 to 8,

- where the device (3) has at least one extraction unit (10) with which are extracted, from a pre-specified number of recorded images ($A_1...A_k$) where applicable temporarily stored, a pre-specified number of pre-specified image features and hence a pre-specified number of feature images ($M_1...M_m$) is produced,
- and after the at least one extraction unit (10) is connected at least one binarisation unit (8) in which a binarisation function (Z) is applied to the feature values of mutually corresponding and/or allocated image points of a pre-specified number of feature images ($M_1...M_m$) and a resulting binary function value is calculated for the individual image points and a binary image (B) produced,
**characterised in that**
- after the binarisation unit (8) is connected a blob labelling device (6) in which the blob labelling algorithm is applied to the resulting binary image and a label image (L) produced, preferably temporarily stored,
- that after the at least one extraction unit (10) is connected a value former (13) with which function images (V') are derived from the feature images ($M_1....M_m$), **in that** from the feature values of mutually corresponding and/or allocated image points of a pre-specified number of feature images ($M_1...M_m$), using a pre-specified evaluation function (V) a function value is determined for the image point concerned and hence a function image (V') produced,
- that connected to the blob labelling unit (6) and the value former (13) is a calculation unit (14) in which for each individual blob the function values and/or coordinates of the corresponding and/or allocated image points of the function images (V') are linked using at least one pre-specified quality or key function (F) and hence quality or key values determined for the individual blobs, and
- that connected to the computer unit (14) is an analysis unit (2) in which are analysed and assessed the quality or key values calculated for the blobs concerned as a result of the test.

10. Device according to claim 9, **characterised in that** after the calculation unit (14) is connected a preferably initialisable results memory (4) to store the quality or key values obtained for the individual blobs with the quality or key function (F) or where applicable intermediate results of this calculation step, in particular for blob by blob linking, preferably cumulation, of the function values determined for the individual image points of the blob concerned using the evaluation function (V).

11. Device according to claim 9 or 10, **characterised in that** connected after the at least one extraction unit (10) is at least one memory (9) for the feature images ($M_1...M_m$), and/or

- that before the at least one extraction unit ($E_1...E_m$) is connected at least one memory (12) for the recorded images ($A_1...A_k$) and where applicable at least one memory (11) for the nominal images ($S_1...S_s$) and/or
- that the output of at least one, preferably a number of and in particular all, memories (12) for the recorded images ($A_1...A_k$) and where applicable the output of at least one, preferably a number of and in particular all, memories (11) for the nominal images ($S_1...S_s$) are connected to at least one, preferably a number of and in particular all, extraction units (10), and/or
- that allocated to or connected after each extraction unit (10) is a memory (9) for the feature image it has produced or extracted, and/or

- that the outputs of at least one or a number of, preferably all, memories (9) for the feature images ($M_1...M_m$) are connected to the binarisation unit (7) and/or the value former (13), and/or

- that the extraction units (10) have at least one memory in which is stored at least one pre-specified, where applicable modifiable function ($E_1...E_m$) for extracting image features from the recorded images ($A_1...A_k$) and/or the nominal images ($S_1...S_s$), and/or

- that the binarisation unit (7) has a memory in which is stored at least one pre-specified, preferably modifiable, binarisation function (Z)

- that the value former (13) has a memory in which is stored at least one, preferably a number of, pre-specified preferably modifiable valuation function(s) (V), and/or

- that the calculation unit (14) comprises at least one memory in which is stored at least one pre-specified, preferably modifiable quality or key function (F).

12. Device according to any of claims 10 to 11, **characterised in that** as recorder devices ($K_1...K_k$) are provided grey value cameras, colour cameras, cameras separated by colour channels, transmitted light cameras, UV cameras, infra-red cameras, cameras for different illuminations or for recording under different illumination angles and/or light frequencies, scanners, line cameras, video cameras or similar.

**Revendications**

1. Procédé de contrôle ou d'analyse d'objets (1), dans lequel on enregistre, à l'aide d'au moins un dispositif d'enregistrement ($K_1.....K_k$), de préférence d'un appareil d'enregistrement optoélectronique, un certain nombre d'images de l'objet (1), en particulier de la même zone d'objet, de préférence simultanément, et dans lequel on évalue ces images en utilisant un algorithme d'étiquetage d'objets larges binaires (blobs),

- dans lequel on extrait d'un nombre prédéterminé des images (A1.....Ak) enregistrées, éventuellement bufférisées, en particulier en mode de points d'image, en utilisant respectivement au moins une fonction d'extraction prédéterminée ($E_1.....E_m$), un nombre prédéterminé de caractéristiques d'image ou de valeurs caractéristiques prédéterminées et on crée de la sorte, en particulier en conservant la structure d'image, un nombre prédéterminé d'images caractéristiques ($M_1.....M_m$), et

- dans lequel on calcule, à partir des valeurs caractéristiques des points d'image correspondants et/ou affectés les uns aux autres d'un nombre prédéterminé d'images caractéristiques ($M_1.....M_m$) avec une fonction de binarisation prédéterminée (Z), des valeurs fonctionnelles binaires et l'on crée une image binaire (B), **caractérisé en ce que**

- l'algorithme d'étiquetage d'objets larges binaires est appliqué sur l'image binaire obtenue et une image d'étiquette (L) est créée, de préférence bufférisée,

- on déduit des images caractéristiques ($M_1.....M_m$), en particulier en conservant la structure d'image, des images fonctionnelles (V'), en calculant, à partir des valeurs caractéristiques de points d'image correspondants et/ou affectés les uns aux autres d'un nombre prédéterminé d'images caractéristiques ayant une fonction d'évaluation prédéterminée (V), une valeur fonctionnelle et en l'affectant aux points d'image respectifs des images fonctionnelles (V'),

- on attribue aux points d'image individuels des objets larges binaires de l'image d'étiquette (L) ceux des points d'image correspondants et/ou affectés des images fonctionnelles (V') ou on les écrase sur ceux-ci et l'on applique au moins une fonction prédéterminée de qualité ou d'identification (F) sur les valeurs obtenues des points d'image des objets larges binaires individuels, et

- on exploite ou l'on estime les mesures de qualité ou d'identification calculées avec la au moins une fonction de qualité ou d'identification (F) pour les objets larges binaires individuels, comme résultat du contrôle.

2. Procédé selon la revendication 1, **caractérisé en ce que** la fonction de binarisation (Z) et la fonction d'évaluation (V) sont des fonctions différentes et indépendantes et/ou sont respectivement appliquées sur des valeurs caractéristiques de points d'image correspondants et/ou affectés en partant d'une quantité différente d'images caractéristiques ($M_1.....M_m$).

3. Procédé selon la revendication 1 ou 2, **caractérisé en ce qu'**un certain nombre d'images théoriques ($S_1.....S_s$) sont mises à disposition, en particulier stockées, des caractéristiques d'image ou des valeurs caractéristiques prédéterminées de points d'image d'un nombre prédéterminé d'images théoriques sont extraites par les fonctions d'extraction ($E_1.....E_m$) et les images caractéristiques ($M_1.....M_m$) ayant ces caractéristiques d'images extraites sont créées en plus de celles ayant les caractéristiques d'image des images enregistrées et/ou,

- différentes images de l'objet (1) sont enregistrées, en particulier simultanément, sous différentes longueurs d'onde, sous différents angles d'enregistrement, sous forme d'images en transparence et/ou sous différents angles d'éclairage et sont utilisées pour l'extraction et/ou

- on met à disposition ou à profit, comme images théoriques ($S_1$.....$S_s$), des images avec des valeurs de gris théoriques, des valeurs de couleurs théoriques et/ou d'autres valeurs caractéristiques théoriques, par exemple des intensités de bords, des minima ou des maxima locaux ou similaires, des images ayant des valeurs de gris maximales ou minimales permises, des valeurs de couleurs et/ou d'autres valeurs caractéristiques maximales ou minimales, des images ayant des valeurs d'écart maximales permises ou des images ayant des valeurs de pondération ou similaires pour l'extraction des caractéristiques.

4. Procédé selon l'une quelconque des revendications 1 à 3, **caractérisé en ce que** les images caractéristiques ($M_1$.....$M_m$) contiennent, comme caractéristiques d'image ou valeurs caractéristiques des points d'image individuels, des valeurs de luminosité, des valeurs d'intensité, des valeurs d'intensité de bord, des directions de bord et/ou, en particulier, des écarts pondérés de valeurs de tolérance ou similaires, et/ou

- lors de la création d'une image caractéristique ($M_1$.....$M_m$), les valeurs caractéristiques, retirées des images enregistrées et éventuellement des images théoriques ($S_1$.....$S_s$), des points d'image individuels sont reprises de manière inchangée ou un minimum, un maximum, une somme, une somme pondérée, une différence d'au moins deux valeurs caractéristiques sont déterminés en mode de points d'image à partir les valeurs caractéristiques retirées et/ou l'on effectue sur les valeurs caractéristiques un filtrage, par exemple un filtrage de valeur moyenne, un filtrage de Gauss, un filtrage de Gabor, un filtrage de minimum, un filtrage de maximum et/ou une transformation d'image, par exemple une transformation cosinusoïdale discrète ou une transformation d'ondelette et/ou,

- on affecte à un point d'image d'une image caractéristique ($M_1$.....$M_m$) la valeur caractéristique de points d'image correspondants ou affectés d'au moins une image enregistrée et éventuellement d'au moins une image théorique et/ou, lors de l'affectation des points d'image, on prend également en compte les points d'image adjacents.

5. Procédé selon l'une quelconque des revendications 1 à 4, **caractérisé en ce que**, avec la fonction de binarisation (Z), on contrôle ou on décide si la valeur caractéristique d'un point d'image d'une image caractéristique ($M_1$.....$M_m$) ou la valeur fonctionnelle de valeurs caractéristiques de points d'image correspondants et/ou affectés à partir de plusieurs images caractéristiques ($M_1$.....$M_m$), par exemple une somme pondérée, une somme des carrés, un maximum ou similaire d'une ou plusieurs valeurs caractéristiques, se situe dans une plage de valeurs prédéterminée, est en particulier supérieure ou inférieure à une valeur prédéterminée ou correspond à un critère de décision prédéterminé et l'on effectue la binarisation en fonction de ce contrôle, en choisissant éventuellement la plage de valeurs prédéterminée ou le critère de décision pour chaque point d'image de l'image caractéristique ($M_1$.....$M_m$) ou un certain nombre de ceux-ci de manière identique ou en les modifiant en fonction des coordonnées des points d'image de l'image caractéristique.

6. Procédé selon l'une quelconque des revendications 1 à 5, **caractérisé en ce que**, avec la fonction d'évaluation (V), des maxima, des minima, des sommes, des valeurs moyennes et/ou des différences sont formés des valeurs caractéristiques individuelles et/ou affectées aux points d'image affectés de l'image ou des images caractéristiques ($M_1$.....$M_m$), et/ou les valeurs caractéristiques et/ou ces résultats sont pondérés et/ou élevés à une puissance plus haute et/ou,

- pour déterminer une mesure de qualité ou d'identification avec au moins une fonction de qualité ou d'identification (F) pour les objets larges binaires individuels, on calcule des maxima, des minima, des sommes pondérées et/ou la somme des carrés pour les valeurs fonctionnelles des points d'image individuels des gros objets binaires que l'on obtient avec la fonction d'évaluation (V).

7. Procédé selon l'une quelconque des revendications 1 à 6, **caractérisé en ce que** l'on utilise la même fonction de qualité ou d'identification (F) sur toutes les valeurs de points d'image des objets larges binaires présents d'une image d'étiquette (L).

8. Procédé selon l'une quelconque des revendications 1 à 7, **caractérisé en ce qu'**un certain nombre, de préférence toutes les valeurs fonctionnelles obtenues lors de l'application des fonctions de qualité ou d'identification (F) sur les valeurs d'image des points d'image de l'objet large binaire respectif sont combinées les unes aux les autres, de préférence totalisées dans une mémoire initialisable (4) affectée à cet objet large binaire et/ou,

- lors de l'application d'au moins une fonction de qualité ou d'identification (F), on associe les coordonnées des points d'image des objets larges binaires, en particulier en multipliant les valeurs fonctionnelles affectées aux points d'image individuels des objets larges binaires avec les coordonnées.

9. Dispositif pour contrôler et analyser des objets (1) avec au moins un dispositif d'enregistrement ($K_1$.....$K_k$), par exemple d'un appareil d'enregistrement optoélectronique, pour enregistrer un certain nombre d'images ($A_1$.....$A_k$) de l'objet (1), en particulier de la même zone d'objet, et avec une unité d'exploitation (2), dans laquelle ces images sont exploitées en utilisant un algorithme d'étiquetage d'objets larges binaires, en particulier pour mettre en oeuvre le procédé selon l'une quelconque des revendication 1 à 8,

- dans lequel le dispositif (3) présente au moins une unité d'extraction (10) avec laquelle on extrait d'un nombre prédéterminé d'images ($A_1$.....$A_k$) enregistrées, éventuellement bufférisées, respectivement, un nombre prédéterminé de caractéristiques d'image prédéterminées et l'on crée de la sorte un nombre prédéterminé d'images caractéristiques ($M_1$.....$M_m$),
- et à la au moins une unité d'extraction (10) est raccordée en aval au moins une unité de binarisation (8), dans laquelle on applique sur les valeurs caractéristiques de points d'image correspondants et/ou affectés les uns aux autres d'un nombre prédéterminé d'images caractéristiques ($M_1$.....$M_m$), respectivement, une fonction de binarisation (Z) et on calcule respectivement une valeur fonctionnelle binaire obtenue pour les points d'image individuels et on crée une image binaire (B), **caractérisé en ce que**
- à l'unité de binarisation (8) est raccordé en aval un dispositif d'étiquetage d'objets larges binaires (6), dans lequel on applique l'algorithme d'étiquetage d'objets larges binaires sur l'image binaire obtenue et une image d'étiquette (L) est créée, de préférence bufférisée,
- à la au moins une unité d'extraction (10) est raccordé en aval un dispositif d'évaluation (13) avec lequel on tire des images caractéristiques ($M_1$.....$M_m$) des images fonctionnelles (V') en calculant, à partir des valeurs caractéristiques de points d'image correspondants et/ou affectés les uns aux autres d'un nombre prédéterminé d'images caractéristiques ($M_1$.....$M_m$) selon une fonction d'évaluation prédéterminée (V), une valeur fonctionnelle pour le point d'image respectif et on crée de la sorte une image fonctionnelle (V'),
- à l'unité d'étiquetage d'objets larges binaires (6) et au dispositif d'évaluation (13) est raccordée une unité de calcul (14), dans laquelle, pour chaque objet large binaire individuel, on associe les valeurs fonctionnelles et/ou les coordonnées des points d'image correspondants et/ou affectés des images fonctionnelles (V) en utilisant au moins une fonction prédéterminée de qualité ou d'identification (F) et on détermine de la sorte des mesures de qualité ou d'identification pour les objets larges binaires individuels, et
- à l'unité de calcul (14) est raccordée une unité d'exploitation (2), dans laquelle on exploite et on évalue la mesure de qualité ou d'identification calculée pour les objets larges binaires respectifs comme résultat du contrôle.

10. Dispositif selon la revendication 9, **caractérisé en ce qu'**à l'unité de calcul (14) est raccordée en aval une mémoire de résultat de préférence initialisable (4) pour mémoriser les mesures de qualité ou d'identification obtenues avec la fonction de qualité et d'identification (F) pour les objets larges binaires individuels, ou, éventuellement, les résultats intermédiaires de cette étape de calcul, en particulier pour combiner en objets larges binaires, de préférence pour totaliser, les valeurs fonctionnelles déterminées pour les points d'image individuels des objets larges binaires avec la fonction d'évaluation (V).

11. Dispositif selon la revendication 9 ou 10, **caractérisé en ce qu'**à la au moins une unité d'extraction est raccordée en aval au moins une mémoire (9) pour les images caractéristiques ($M_1$.....$M_m$) et/ou

- à la au moins une unité d'extraction ($E_1$.....$E_m$) sont raccordées en amont au moins une mémoire (12) pour les images enregistrées ($A_1$.....$A_k$) et éventuellement au moins une mémoire (11) pour les images théoriques ($S_1$.....$S_s$), et/ou
- la sortie d'au moins une, de préférence d'un certain nombre, en particulier, de toutes les mémoires (12) pour les images enregistrées ($A_1$.....$A_k$) et éventuellement la sortie d'au moins une, de préférence d'un certain nombre, en particulier, de toutes les mémoires (11) pour les images théoriques ($S_1$.....$S_s$) sont raccordées à au moins une, de préférence un certain nombre, en particulier toutes les unités d'extraction (10) et/ou
- à chaque unité d'extraction (10) est affectée ou raccordée en aval une mémoire (9) pour l'image caractéristique créée ou extraite par l'unité d'extraction et/ou
- les sorties d'au moins une ou d'un certain nombre, de préférence, toutes les mémoires (9) pour les images

caractéristiques ($M_1$.....$M_m$) sont raccordées à l'unité de binarisation (7) et/ou au dispositif d'évaluation (13), et/ou
- les unités d'extraction (10) présentent au moins une mémoire, dans laquelle au moins une fonction prédéterminée, éventuellement modifiable ($E_1$.....$E_m$), est enregistrée pour extraire des caractéristiques d'image à partir des images enregistrées ($A_1$.....$A_k$) et/ou des images théoriques ($S_1$.....$S_s$), et/ou
- l'unité de binarisation (7) présente une mémoire, dans laquelle on enregistre au moins une fonction de binarisation prédéterminée, de préférence modifiable (Z) et/ou,
- le dispositif d'évaluation (13) présente une mémoire, dans laquelle on enregistre au moins une, de préférence un certain nombre de fonctions d'évaluation (V) prédéterminées, de préférence modifiables, et/ou
- l'unité de calcul (14) comprend au moins une mémoire, dans laquelle on enregistre au moins une fonction de qualité ou d'identification (F) prédéterminée, en particulier modifiable.

**12.** Dispositif selon l'une quelconque des revendications 10 à 11, **caractérisé en ce que** l'on prévoit comme dispositifs d'enregistrement ($K_1$.....$K_k$) des caméras à niveaux de gris, des caméras couleurs, des caméras séparées par canaux de couleurs, des caméras par transparence, des caméras UV, des caméras infrarouges, des caméras pour différents éclairages ou pour l'enregistrement sous différents angles d'éclairage et/ou différentes fréquences de lumière, des scanneurs, des caméras à balayage par lignes, des caméras vidéo ou similaires.

Fig. 1

Fig. 2

Fig. 3

Fig. 4

Fig. 5

Fig. 6